# FASCICULE DE BREVET EUROPEEN

(11) **EP 3 084 198 B1**
(45) Date de publication et mention de la délivrance du brevet: **18.12.2019**
(21) Numéro de dépôt: 14830821.6
(22) Date de dépôt: 18.12.2014
(51) Int. Cl.: F02B 29/04, F02B 37/04, F02M 35/10, F02B 33/40, F02B 39/10, F02M 31/04

(54) **ENSEMBLE COMPRENANT UN MOTEUR THERMIQUE ET UN COMPRESSEUR ÉLECTRIQUE CONFIGURÉ POUR CHAUFFER LES GAZ D'ADMISSION**
ANORDNUNG MIT EINER WÄRMEKRAFTMASCHINE UND EINEM ELEKTRISCHEN VERDICHTER ZUM ERHITZEN DER EINTRITTSGASE
ASSEMBLY INCLUDING A HEAT ENGINE AND AN ELECTRIC COMPRESSOR CONFIGURED TO HEAT THE INLET GASES

(30) Priorité: 19.12.2013 FR 1363113
(43) Date de publication de la demande: 26.10.2016
(73) Titulaire: Valeo Systèmes de Contrôle Moteur, 95800 Cergy Saint Christophe (FR)
(72) Inventeur: RAMSEYER, Aurélien, F-92410 Ville d'Avray (FR); LUTZ, Philippe, F-78100 Le Vesinet (FR); MARCINKOWSKI, Julien, F-78500 Sartrouville (FR); WEBSTER, Matthew, Brentwood Essex (UK) CM13 2NN (GB)
(74) Mandataire: Garcia, Christine
(86) Numéro de dépôt international: PCT/FR2014/053417
(87) Numéro de publication internationale: WO 2015/092290

(56) Documents cités:
- EP-A1- 1 391 595
- EP-A2- 1 342 893
- WO-A1-01/88351
- WO-A1-2015/001264
- WO-A2-2007/030906
- WO-A2-2011/007121
- JP-U- H0 356 862
- US-A1- 2012 152 213
- US-B1- 6 932 063

## Description

La présente invention concerne le domaine du chauffage des gaz d'admission d'un moteur thermique, et plus particulièrement un ensemble comprenant un moteur thermique et un compresseur électrique configuré pour chauffer les gaz d'admission.

La présente invention concerne l'ensemble des moteurs thermiques essences, diesel, gaz, éthanol, qu'ils soient suralimentés ou pas.

Il existe des phases de vie du véhicule pendant lesquelles il est intéressant de chauffer les gaz d'admission. Il s'agit surtout des démarrages à froid, lorsque le moteur est lui-même froid et que la température de l'air admis est faible. En effet, dans ce cas, la combustion est ralentie et génère plus d'émissions polluantes, en particulier plus d'imbrûlés de type HC et CO, et de particules. Cela est d'autant plus vrai que la température extérieure est faible.

Actuellement, pour chauffer ou réchauffer les gaz d'admission, il est envisagé des systèmes électriques de chauffage des gaz d'admission tenant compte des futures contraintes de dépollution selon la norme Euro 6 et au-delà. Il s'agit par exemple de résistances placées directement dans les conduits d'admission d'air. Cette solution par réchauffage électrique est efficace mais présente deux inconvénients :
- elle sert uniquement à réchauffer les gaz d'admission. Le coût du système est donc difficile à valoriser, puisque son utilité est réduite aux seuls démarrages à froid, pendant une durée de quelques dizaines de secondes.
- elle est intrusive : il faut trouver une solution d'intégration de la résistance électrique, et gérer l'étanchéité du circuit d'air.

Dans le cas des moteurs suralimentés, un système de refroidissement des gaz d'admission est nécessaire pour le fonctionnement à chaud du moteur, afin d'augmenter la masse d'air admise dans le moteur. Ce système est contre-productif lors des démarrages à froid, quand l'objectif est au contraire d'augmenter la température des gaz d'admission. Afin d'éviter le refroidissement, il existe des systèmes de dérivation de cet échangeur. Toutefois, bien que ce système évite le refroidissement des gaz, il ne permet pas de les réchauffer.

WO2007/030906A2 divulgue en ensemble permettant de réchauffer les gaz d'admission.

La présente invention a donc pour objet de pallier un ou plusieurs des inconvénients des systèmes de réchauffage des gaz d'admission de l'art antérieur en proposant un système de chauffage des gaz d'admission pour un moteur thermique, équipé d'un compresseur électrique, ne nécessitant pas d'installation de dispositif supplémentaire pour cette seule fin.

Pour cela la présente invention propose un ensemble selon la revendication indépendante 1.

Selon un mode de réalisation de l'invention, le compresseur électrique est équipé d'un moteur à reluctance variable.

Selon un mode de réalisation de l'invention, l'ensemble selon l'invention, comprend au moins une vanne, disposée en amont du moteur thermique et en amont ou en aval du compresseur électrique, régulant le débit des gaz d'admission dans le moteur thermique.

Selon l'invention, le compresseur électrique est intégré dans un premier circuit de dérivation comportant un premier moyen de dérivation configuré pour permettre la recirculation d'une partie des gaz issus du compresseur électrique à travers ledit compresseur électrique lors du chauffage des gaz d'admissions.

Selon l'invention, l'ensemble selon l'invention, comprend un échangeur de chaleur disposé sur le conduit d'admission.

Selon l'invention, l'échangeur de chaleur est intégré dans un deuxième circuit de dérivation comportant un deuxième moyen de dérivation configuré pour que les gaz d'admission ne traverse pas l'échangeur de chaleur lors du chauffage des gaz d'admission.

Selon un mode de réalisation de l'invention, le compresseur électrique est disposé en amont de l'échangeur de chaleur, et en amont de la vanne.

Selon un autre mode de réalisation de l'invention, le compresseur électrique est disposé en aval de l'échangeur de chaleur, et en amont de la vanne.

La présente invention concerne également un procédé de chauffage des gaz d'admission mettant en œuvre l'ensemble selon l'invention, comprenant :
- une étape d'activation du compresseur électrique,
- une étape de circulation des gaz d'admission à travers le compresseur électrique,
- une étape de régulation du débit des gaz d'admission avec une vanne.

Selon un mode de réalisation de l'invention, le procédé selon comprend une deuxième étape de circulation des gaz d'admission à travers le compresseur électrique.

La présente invention concerne également l'utilisation de l'ensemble selon l'invention pour chauffer les gaz d'admission lors d'une phase de démarrage.

La présente invention concerne également l'utilisation de l'ensemble selon l'invention pour chauffer le conduit d'admission lors d'une phase préalable au démarrage.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la figure 1 est une représentation schématique d'un premier mode de fonctionnement du dispositif selon l'invention,
- la figure 2 est une représentation schématique d'un deuxième mode de fonctionnement du dispositif selon l'invention.

La présente invention concerne un moteur thermique équipé d'un compresseur électrique utilisé pour chauffer les gaz d'admission pendant la phase de démarrage ou pendant la phase préalable au démarrage.

Dans la suite de la description, on entend par compresseur électrique, un compresseur d'air, volumétrique ou non, centrifuge ou radial par exemple, entraîné par un moteur électrique, dans le but de suralimenter un moteur thermique.

Selon un mode de réalisation de l'invention le compresseur est un compresseur de suralimentation en air.

Selon un mode de réalisation de l'invention, le moteur électrique du compresseur électrique est un moteur à courant continu ou alternatif, synchrone, ou tout type de moteur électrique du même type.

Plus précisément, selon un mode de réalisation de l'invention, le moteur électrique est un moteur à reluctance variable (également appelée machine SRM pour Switched Reluctance Motor selon la terminologie anglaise).

La suralimentation permet de conserver les performances d'un moteur tout en en diminuant la cylindrée (downsizing selon la terminologie anglaise). Pour un couple donné à fournir, la charge est alors plus importante, ce qui conduit généralement à un meilleur rendement et une consommation de carburant réduite. Un compresseur électrique est utilisé seul ou en complément d'un turbocompresseur dans le but d'en réduire le temps de réponse. La pleine marche du moteur peut ainsi être atteinte plus rapidement, ce qui permet de réduire encore la cylindrée dans l'objectif de réduire la consommation moyenne en usage courant du moteur.

Le compresseur électrique est donc généralement activé pour augmenter la masse volumique de l'air admis. L'augmentation de la masse volumique s'accompagne nécessairement d'une augmentation de la température. Dans le cadre de l'invention, c'est cette augmentation de température qui est recherchée. Plus précisément, on utilise directement le compresseur électrique pour chauffer les gaz d'admission.

Dans le cadre de l'invention, on entend par phase de démarrage la phase au cours de laquelle le moteur est mis en fonctionnement.

Dans le cas de la phase de démarrage du moteur, le compresseur électrique permet au moins de chauffer les gaz d'admission. Selon un mode de réalisation, le compresseur électrique permet au moins de chauffer le conduit d'admission et les gaz d'admission.

Dans le cadre de l'invention, on entend par phase préalable au démarrage, la phase préalable à la mise en fonctionnement du moteur.

Dans le cas de la phase préalable à la mise en fonctionnement du moteur, le compresseur électrique permet au moins de chauffer le conduit d'admission.

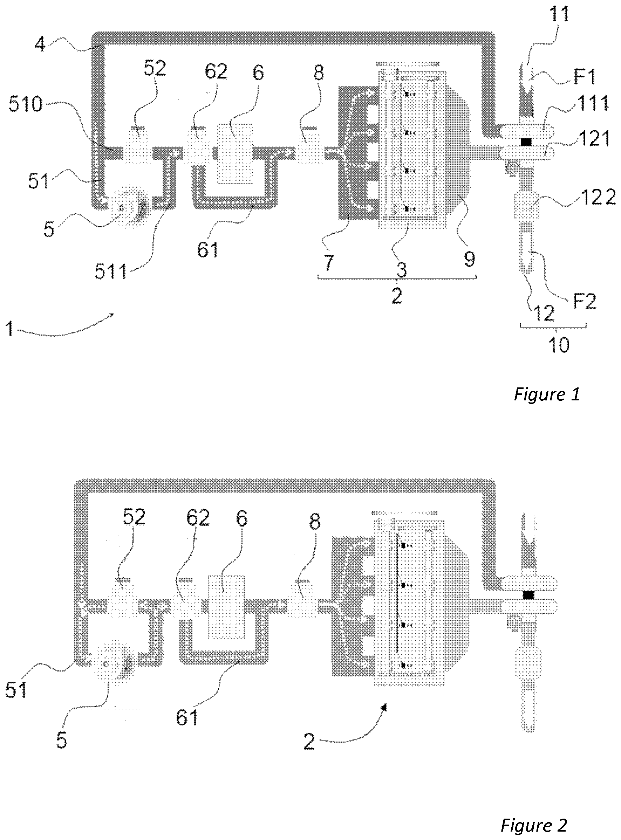

L'ensemble 1 moteur concerné par la présente invention, dont un mode de réalisation est illustré sur les figures 1 et 2 avec le conduit d'admission 4 du circuit d'admission, comprend un moteur 2 thermique à combustion interne de véhicule automobile et un compresseur électrique 5.

Ce moteur 2 comporte une chambre de combustion 3 comportant une pluralité de cylindres, au nombre de quatre sur les figures, destinée à recevoir un mélange de comburant et de carburant, et par exemple l'essence ou le diesel comme carburant et de l'air pur ou un mélange air/gaz de recirculation comme comburant.

La combustion dans les cylindres génère le travail du moteur 2. Le fonctionnement du moteur 2 est classique : les gaz sont admis dans la chambre de combustion 3, y sont comprimés, brûlés puis expulsés sous forme de gaz d'échappement.

Ce moteur 2 a une entrée reliée au conduit d'admission 4 et une sortie reliée à un circuit d'échappement de gaz 10.

L'entrée 11 du conduit d'admission 4 définit l'entrée par laquelle l'air frais pénètre dans l'ensemble 1 tandis que la sortie 12 du circuit d'échappement 10 définit la sortie par laquelle les gaz d'échappement sont évacués de l'ensemble 1.

Le conduit d'admission 4 débouche dans un collecteur d'admission 7 qui forme ainsi une boîte d'entrée des gaz dans la chambre de combustion 3 du moteur 2.

On entend par conduit d'admission 4 la canalisation d'admission pour les gaz d'admission, dont le flux est représenté par la flèche F1, cette canalisation étant située entre l'entré 11 d'air et le moteur 2.

Selon un mode de réalisation de l'invention le conduit d'admission 4 comporte un compresseur mécanique 111 des gaz d'admission, qui est par exemple un turbocompresseur.

Selon l'invention, le conduit d'admission 4 comporte un échangeur de chaleur 6, permettant le refroidissement des gaz d'admission, et par exemple les gaz issus du compresseur mécanique 111. Cet échangeur de chaleur 6 également appelé "RAS" par l'homme du métier, qui signifie "refroidisseur d'air de suralimentation"; a pour fonction de refroidir les gaz d'admission. L'échangeur de chaleur 6 assure un échange thermique entre les gaz d'admission et le fluide caloporteur de l'échangeur de chaleur 6. En sortie de l'échangeur de chaleur 6, les gaz sont à une température proche de celle du fluide caloporteur de l'échangeur de chaleur 6.

Selon un mode de réalisation de l'invention, en amont du collecteur d'admission 7 des gaz dans le moteur 2, le conduit d'admission 4 comporte une vanne 8 comportant un obturateur de type papillon dont la fonction est de régler le débit de gaz pour la régulation du régime moteur. Cette vanne 8 est commandée par une unité de commande moteur (également appelé ECU qui signifie Engine Control Unit selon la terminologie anglaise), bien connue de l'homme du métier, et permet de réguler la quantité d'air introduite dans le moteur. Dans le cadre de l'invention, lorsque le compresseur électrique est utilisé dans le but de réchauffer les gaz d'admission, cette vanne 8 est plus fermée que si le compresseur électrique était inactif, en conséquence de quoi la quantité d'air admise est toujours la même, mais l'air est admis à une plus haute température.

Selon un mode de réalisation de l'invention, la vanne 8 papillon est en amont du compresseur électrique 5.

Selon un mode de réalisation de l'invention, la vanne 8 papillon est en aval du compresseur électrique 5.

La sortie du moteur 2 est formée par un collecteur 9 des gaz d'échappement. Ce dernier est relié à une voie ou canalisation 124 d'échappement des gaz faisant partie du circuit d'échappement de gaz.

Selon un mode de réalisation de l'invention, le circuit d'échappement 10 comporte une turbine 121, solidaire en rotation du compresseur mécanique 111 des gaz d'admission et formant avec lui un turbocompresseur. La turbine 121 est entraînée par les gaz d'échappement de la voie d'échappement 124, dont le flux est schématisé par la flèche F2. Selon un mode de réalisation, le flux traverse le catalyseur 122.

L'ensemble 1 comprend selon un mode de réalisation, une boucle de retour, non illustrée, permettant à tout ou partie des gaz d'échappement circulant dans le circuit d'échappement 10 d'être réinjectés dans le moteur 2. La boucle de retour comprend une sortie débouchant dans le conduit d'admission 4 et par laquelle des gaz d'échappement sont réinjectés en amont du moteur 2.

Comme illustré sur la figure 1, l'ensemble 1 comprend un compresseur électrique 5. Ce compresseur 5 est entraîné par un moteur électrique non représenté dont la commande est par exemple effectuée par l'unité de commande moteur. Le compresseur électrique 5 est disposé dans la boucle du conduit d'admission 4.

Dans une première variante de l'invention, le compresseur électrique 5 est disposé en amont de l'échangeur de chaleur 6, et les gaz issus de l'échangeur de chaleur 6 débouchent en amont de la vanne 8 papillon puis dans le collecteur d'admission 7.

Selon une autre variante de l'invention, le compresseur électrique 5 est disposé en amont de la vanne 8 papillon et les gaz issus du compresseur électrique 5 circulant à travers la vanne débouchent ensuite dans le collecteur d'admission 7.

Selon une autre variante de l'invention, le compresseur électrique 5 est disposé en amont du compresseur mécanique 111.

Selon un mode de réalisation de cette variante, le compresseur électrique 5 est disposé en amont de la vanne 8 papillon, entre l'échangeur de chaleur 6 et la vanne 8 papillon.

Selon une autre variante de l'invention, le compresseur électrique 5 est disposé en aval de la vanne 8 papillon.

Selon l'invention, le compresseur électrique 5 est intégré dans un premier circuit de dérivation 51 (également appelé circuit by-pass selon la terminologie anglaise) comportant un premier moyen de dérivation 52 du type vanne. Le compresseur électrique peut ainsi être court-circuité par ce système de dérivation. Cette première vanne 52 de dérivation est par exemple une vanne papillon. Cette première vanne 52 de dérivation est par exemple commandée par l'unité de commande du moteur. Le premier circuit de dérivation 51 en association avec le premier moyen de dérivation 52 permet en général aux gaz d'admission arrivant via le circuit d'admission 4 de circuler à travers le compresseur électrique ou bien de le contourner, par la fermeture ou l'ouverture du premier moyen de dérivation 52. Le premier moyen de dérivation 52 de type vanne est disposé sur un premier conduit 510, du circuit de dérivation 51, différent de celui du compresseur électrique 5 de façon à ce que lorsque la vanne 52 de dérivation est fermée les gaz d'admission soient dirigés vers le deuxième conduit 511 où est disposé le compresseur électrique 5.

Ainsi en dehors des phases de démarrage, ou de manière générale des phases ne nécessitant pas l'utilisation du compresseur électrique 5, les gaz d'admission circulent dans le premier conduit 510 et ne traversent pas le compresseur électrique 5.

Selon un mode de réalisation de l'invention, lorsque la vanne 52 de dérivation est ouverte les gaz d'admission circulent dans le premier conduit 510 et à travers le compresseur électrique.

Selon l'invention, l'échangeur de chaleur 6 est intégré dans un deuxième circuit de dérivation 61 comportant un deuxième moyen de dérivation 62 du type vanne. De la même façon que pour le premier circuit de dérivation 51 du compresseur électrique, ce deuxième circuit de dérivation 61 associé au deuxième moyen de dérivation 62 permet au gaz d'admission de passer à travers l'échangeur de chaleur 6 ou de le contourner par la fermeture ou l'ouverture du deuxième moyen de dérivation 62.

Selon l'invention, le premier 52 et le deuxième moyen de dérivation 62 sont formés par une seule et même vanne disposée entre les deux circuits de dérivation 51, 61.

L'invention porte ainsi sur la présence du compresseur électrique associé à au moins une vanne disposée en amont de l'entrée du moteur 2. C'est-à-dire que le compresseur électrique chauffe les gaz d'admission et les comprime, et le débit de ces gaz chauffés et comprimés est régulé par une vanne.

La température de l'air admis ne varie pas entre la sortie du compresseur électrique 5 et l'entrée dans le moteur 2. On entend par ne varie pas le fait que la température est identique à quelques degrés près, c'est-à-dire ceux perdus lors de sa circulation entre le compresseur électrique et l'entrée du moteur.

Le fonctionnement de l'ensemble selon l'invention est le suivant.

Lors d'une phase de démarrage ou préalable au démarrage, les gaz d'admission arrivent via le conduit d'admission 4, sont dirigés vers le circuit de dérivation 51 grâce à la vanne 52 et traversent le compresseur électrique. Dans cette configuration, la vanne 52 du compresseur électrique 5 est en position fermée, les gaz d'amission sont ainsi obligés de traverser le compresseur. Le compresseur est alors activé via l'unité de commande.

A ce moment là, le moyen de dérivation 52 de type vanne est commandé de manière à diriger les gaz d'admission vers le compresseur électrique 5. Les gaz d'admission traversent le compresseur électrique 5 et en ressortent chauffés. Dans cette configuration, l'augmentation de température est d'au moins 10°C et plus.

Selon la première variante de l'invention, les gaz d'admission ainsi chauffés par le compresseur électrique 5 passent ensuite dans le second circuit de dérivation 61 de l'échangeur de chaleur 6 grâce au second moyen de dérivation 62 qui est dans une position ne permettant pas le passage des gaz dans l'échangeur de chaleur 6. Les gaz chauffés par le compresseur électrique arrivent ainsi ensuite directement en amont de la vanne 8 comportant un obturateur de type papillon. La vanne 8 est configurée pour permettre le passage, dans le collecteur d'admission 7, de la quantité de gaz nécessaire à la combustion.

Selon la deuxième variante de réalisation de l'invention, les gaz d'admission ainsi chauffés par le compresseur électrique 5 arrivent directement en amont de la vanne 8 comportant un obturateur de type papillon. La vanne 8 est configurée pour permettre le passage, dans le collecteur d'admission 7, de la quantité de gaz nécessaire à la combustion.

Selon un mode de réalisation de l'invention, le compresseur électrique 5 peut être activé lorsque le moyen de dérivation 52 est ouvert, de sorte qu'une partie du débit réchauffé par et issu du compresseur 5 et circulant dans la branche 511 franchisse le moyen de dérivation 52 dans le sens contraire à son fonctionnement normal et soit mélangé avec l'air frais entrant dans le compresseur 5.

Cette recirculation permet d'augmenter le débit traversant le compresseur électrique 5, ce qui permet de s'éloigner du phénomène de pompage bien connu de l'homme du métier et destructif pour les compresseurs centrifuges et radiaux. Avec cette marge au pompage accrue, il est possible de réchauffer encore plus les gaz d'admission, d'où une température des gaz admis par le moteur encore plus haute. Dans cette configuration, l'augmentation de température est de 50°C et plus.

Les gaz d'admission ainsi chauffés arrivent jusqu'à la vanne 8 de type papillon. La vanne est configurée de façon à laisser passer une quantité suffisante de gaz chauffés pour le fonctionnement du moteur (2).

Les présents modes de réalisation doivent être considérés à titre d'illustration, et peuvent être modifiés sans toutefois sortir de la portée définie par les revendications.

## Revendications

1. Ensemble (1) comprenant :
- un conduit d'admission (4) s'étendant entre une entrée (11) d'air et un moteur thermique (2),
- un moteur thermique (2),
- un compresseur électrique (5) disposé sur le conduit d'admission,
- un échangeur de chaleur (6) disposé sur le conduit d'admission (4),
le compresseur électrique (5) étant configuré pour permettre de chauffer les gaz d'admission circulant dans le conduit d'admission (4),
le compresseur électrique (5) étant intégré dans un premier circuit de dérivation (51) comportant un premier moyen de dérivation (52) configuré pour permettre la recirculation d'une partie des gaz issus du compresseur électrique (5) à travers ledit compresseur électrique lors du chauffage des gaz, **caractérisé en ce que** l'échangeur de chaleur (6) est intégré dans un deuxième circuit de dérivation (61) comportant un deuxième moyen de dérivation (62) configuré pour que les gaz d'admission ne traverse pas l'échangeur de chaleur lors du chauffage des gaz d'admission,
le premier (52) et le deuxième moyen de dérivation (62) étant formés par une seule et même vanne disposée entre les deux circuits de dérivation (51, 61).

2. Ensemble (1) selon la revendication 1, comprenant au moins une vanne (8), disposée en amont du moteur thermique (2) et en amont ou en aval du compresseur électrique (5), régulant le débit des gaz d'admission dans le moteur thermique (2).

3. Ensemble (1) selon la revendication 2 dans lequel le compresseur électrique (5) est disposé en amont de l'échangeur de chaleur, et en amont de la vanne (8).

4. Ensemble (1) selon la revendication 2 dans lequel le compresseur électrique (5) est disposé en aval de l'échangeur de chaleur, et en amont de la vanne (8).

5. Ensemble selon une des revendications 1 à 4, dans lequel le compresseur électrique est équipé d'un moteur à reluctance variable.

6. Procédé de chauffage des gaz d'admission mettant en œuvre l'ensemble (1) selon une des revendications 1 à 5, comprenant :
- une étape d'activation du compresseur électrique (5),
- une étape de circulation des gaz d'admission à travers le compresseur électrique (5),
- une étape de régulation du débit des gaz d'admission avec une vanne (8).

7. Procédé selon la revendication 6, comprenant une deuxième étape de circulation des gaz d'admission à travers le compresseur électrique (5).

8. Utilisation de l'ensemble (1) selon une des revendications 1 à 5 pour chauffer les gaz d'admission lors d'une phase de démarrage.

9. Utilisation de l'ensemble (1) selon une des revendications 1 à 5 pour chauffer le conduit d'admission lors d'une phase préalable au démarrage.

## Patentansprüche

1. Baugruppe (1), die Folgendes aufweist:
- einen Ansaugkanal (4), der sich zwischen einem Lufteinlass (11) und einem Verbrennungsmotor (2) erstreckt,
- einen Verbrennungsmotor (2),
- einen elektrischen Kompressor (5), der auf dem Ansaugkanal angeordnet ist,
- einen Wärmetauscher (6), der auf dem Ansaugkanal (4) angeordnet ist,
wobei der elektrische Kompressor (5) zum Erwärmen der im Ansaugkanal (4) zirkulierenden Ansauggase ausgebildet ist,
wobei der elektrische Kompressor (5) in einen ersten Bypass-Kreis (51) integriert ist, der ein erstes Bypass-Mittel (52) aufweist, das ausgebildet ist, die Rückführung eines Teils der Gase aus dem elektrischen Kompressor (5) über den elektrischen Kompressor beim Erwärmen der Gase zu ermöglichen, **dadurch gekennzeichnet, dass** der Wärmetauscher (6) in einen zweiten Bypass-Kreis (61) integriert ist, der ein zweites Bypass-Mittel (62) aufweist, das so ausgebildet ist, dass die Ansauggase beim Erwärmen der Ansauggase nicht durch den Wärmetauscher strömen,
wobei das erste (52) und das zweite Bypass-Mittel (62) aus einem einzigen gleichen Ventil gebildet werden, das zwischen den zwei Bypass-Kreisen (51, 61) angeordnet ist.

2. Baugruppe (1) nach Anspruch 1, die mindestens ein Ventil (8) enthält, das vor dem Verbrennungsmotor (2) und vor oder nach dem elektrischen Kompressor (5) angeordnet ist und den Durchsatz der Ansauggase in den Verbrennungsmotor (2) regelt.

3. Baugruppe (1) nach Anspruch 2, wobei der elektrische Kompressor (5) vor dem Wärmetauscher und vor dem Ventil (8) angeordnet ist.

4. Baugruppe (1) nach Anspruch 2, wobei der elektrische Kompressor (5) nach dem Wärmetauscher und vor dem Ventil (8) angeordnet ist.

5. Baugruppe nach einem der Ansprüche 1 bis 4, wobei der elektrische Kompressor mit einem Motor mit variabler Reluktanz ausgestattet ist.

6. Verfahren zum Erwärmen der Ansauggase unter Verwendung der Baugruppe (1) nach einem der Ansprüche 1 bis 5, das Folgendes aufweist:
- einen Schritt zum Aktivieren des elektrischen Kompressors (5),
- einen Schritt zum Zirkulieren der Ansauggase durch den elektrischen Kompressor (5),
- einen Schritt zum Regeln des Durchsatzes der Ansauggase mit einem Ventil (8).

7. Verfahren nach Anspruch 6, das einen zweiten Schritt zum Zirkulieren der Ansauggase durch den elektrischen Kompressor (5) aufweist.

8. Verwendung der Baugruppe (1) nach einem der Ansprüche 1 bis 5 zum Erwärmen der Ansauggase während einer Startphase.

9. Verwendung der Baugruppe (1) nach einem der Ansprüche 1 bis 5 zum Erwärmen des Ansaugkanals während einer dem Start vorausgehenden Phase.

## Claims

1. Assembly (1) comprising:
- an intake pipe (4) extending between an air inlet (11) and a combustion engine (2),
- a combustion engine (2),
- an electric compressor (5) positioned on the intake pipe,
- a heat exchanger (6) positioned on the intake pipe (4),
the electric compressor (5) being configured to enable the heating of the intake gases flowing along the intake pipe (4),
the electric compressor (5) being incorporated into a first bypass circuit (51) comprising a first bypass means (52) configured to allow a proportion of the gases from the electric compressor (5) to be recirculated through the said electric compressor when the gases are being heated, **characterized in that** the heat exchanger (6) is incorporated into a second bypass circuit (61) comprising a second bypass means (62) configured so that the intake gases do not pass through the heat exchanger when the intake gases are being heated,
the first (52) and the second bypass means (62) being formed by one and the same valve positioned between the two bypass circuits (51, 61).

2. Assembly (1) according to Claim 1, comprising at least one valve (8), positioned upstream of the combustion engine (2) and upstream or downstream of the electric compressor (5), regulating the flow of intake gases in the combustion engine (2).

3. Assembly (1) according to Claim 2, in which the electric compressor (5) is positioned upstream of the heat exchanger and upstream of the valve (8).

4. Assembly (1) according to Claim 2, in which the electric compressor (5) is positioned downstream of the heat exchanger and upstream of the valve (8).

5. Assembly according to one of Claims 1 to 4, in which the electric compressor is equipped with a switched reluctance motor.

6. Method for heating the intake gases implementing the assembly (1) according to one of Claims 1 to 5, comprising:
- a step of activating the electric compressor (5),
- a step of circulating the intake gases through the electric compressor (5),
- a step of regulating the flow of intake gases using a valve (8).

7. Method according to Claim 6, comprising a second step of circulating the intake gases through the electric compressor (5).

8. Use of the assembly (1) according to one of Claims 1 to 5 for heating the intake gases during a starting phase.

9. Use of the assembly (1) according to one of Claims 1 to 5 for heating the intake pipe during a phase preceding the starting.
